# EUROPEAN PATENT SPECIFICATION

(11) **EP 4 557 143 B1**
(45) Date of publication and mention of the grant of the patent: **15.04.2026**
(21) Application number: 24213585.3
(22) Date of filing: 18.11.2024
(51) Int. Cl.: G06F 21/57

(54) **LOG-BASED SERVERLESS ONTOLOGY TO IMPROVE OBSERVABILITY AND INCIDENT RESPONSE IN MANAGED SERVERLESS APPLICATIONS**
LOGBASIERTE SERVERLOSE ONTOLOGIE ZUR VERBESSERUNG DER BEOBACHTBARKEIT UND DER ZWISCHENFALLREAKTION IN VERWALTETEN SERVERLOSEN ANWENDUNGEN
ONTOLOGIE SANS SERVEUR BASÉE SUR UN JOURNAL POUR AMÉLIORER L'OBSERVABILITÉ ET LA RÉPONSE AUX INCIDENTS DANS DES APPLICATIONS SANS SERVEUR GÉRÉES

(30) Priority: 19.11.2023 IL 30868523
(43) Date of publication of application: 21.05.2025
(73) Proprietor: Deutsche Telekom AG, 53113 Bonn (DE)
(72) Inventor: BENSHIMOL, Lavi, 8481726 Beer sheva (IL); SHABTAI, Asaf, 7684200 Hulda (IL); MIMRAN, David, 6215505 Tel Aviv (IL); ELOVICI, Yuval, 7986400 Arugot (IL); BRODT, Oleg, 8471621 Beer Sheva (IL); LEHMANN, Heiko, D-12587 Berlin (DE)
(74) Representative: Weickmann & Weickmann PartmbB

(56) References cited:
- US-A1- 2019 362 278
- SCOTT ROSE ET AL: "Zero Trust Architecture NIST SP 800-207", 11 August 2020 (2020-08-11), pages 1 - 59, XP061057776, Retrieved from the Internet <URL:https://nvlpubs.nist.gov/nistpubs/SpecialPublications/NIST.SP.800-207.pdf> [retrieved on 20200811], DOI: 10.6028/NIST.SP.800-207
- LAVI BEN-SHIMOL ET AL: "Observability and Incident Response in Managed Serverless Environments Using Ontology-Based Log Monitoring", ARXIV.ORG, CORNELL UNIVERSITY LIBRARY, 201 OLIN LIBRARY CORNELL UNIVERSITY ITHACA, NY 14853, 12 May 2024 (2024-05-12), XP091754626

## Description

### Field of the invention

The present invention relates to the field of cyber security. More particularly, the invention relates to a log-based serverless ontology method, for improving observability and incident response in managed serverless applications.

### Background of the Invention

In recent years, the use of cloud-based environments and, specifically, the serverless computing environment, has grown rapidly. With a serverless model, application developers benefit from reduced operational effort, efficient multi-region scaling, and cost-effective pay-as-you-go deployments [25, 31]. The serverless paradigm breaks an application's monolithic structure into atomic actions and encapsulates them within stateless computation function units [22]. In addition to the function units, Cloud Service Providers (CSPs) offer a wide range of fully managed serverless resources, such as storage, queue management, and notification.

At the same time, serverless technology's shared security responsibility model presents new cybersecurity challenges for organizations [37]. In this model, the CSP is responsible for securing the cloud infrastructure, platforms provided, network traffic, etc., while application developers are responsible for securing the application's data and functionalities. The Cloud Security Alliance1 and Netwrix cloud security survey2 outlined the following serverless application monitoring challenges:
(1) While beneficial in certain scenarios, the high granularity of the CSP logging capabilities can make identifying and mitigating application-layer attacks, e.g., SQL injection, and brute-force authentication attempts, more challenging.
(2) Due to the multiple triggering options (e.g., URL requests, APIs, emails, and rules), serverless apps provide obscure context and limited root cause analysis capabilities.
(3) Each serverless service provided by a CSP is fully managed; therefore application developers cannot implement and use many of their existing cybersecurity frameworks and tools, making it difficult to evaluate the application's attack surface.
(4) Cybersecurity personnel often lack expertise and knowledge regarding managed serverless environments, which limits their ability to detect, prioritize and investigate incidents. Cybersecurity Situational Awareness (CSA - an understanding of the cyber threat environment within which it operates, its associated risk and impacts, and the adequacy of its risk mitigation measures) capabilities are required for the performance of many security tasks, such as real-time monitoring, incident response, risk analysis, and vulnerability assessment [10, 39]. In most cases, these CSA capabilities rely heavily on audit log analysis [1]. The logs generated by the CSP can assist in detecting attacks in real time, mitigating identified vulnerabilities, and taking postincident action (e.g., restricting permissions) [13, 21, 33, 38]. Security teams face challenges in assessing and managing serverless application cybersecurity risks due to the dynamic nature of the environment, which is characterized by ephemeral functions, unpredictable workloads, and frequent code updates. Maintaining effective CSA capabilities allows the security team to improve observability and reduce overall Mean Time To Detect (MTTD - the average period between the beginning of an incident and the amount of time it takes the organization to identify the issue) in cybersecurity incidents [29].

Existing security frameworks for serverless applications do not generalize well to all application architectures, necessitating that the framework be adapted and then integrated within each application architecture [2, 7, 14, 20, 26, 30, 32, 36]. Moreover, the frameworks are difficult to implement because: (1) Application security operations are often managed by the organization's security team which may have limited knowledge regarding a specific application's functionality and architecture [10, 39]. Although existing frameworks, such as information flow control and application monitoring, enhance CSA capabilities, they require considerable expertise, time, and effort to implement. (2) The implementation of existing frameworks requires access to the application's code and/or data, which may add latency and computational overhead to the application flow.

US 2019/0362278 discloses a method that includes determining a social graph of a plurality of users in an organization. The method then proceeds to apply a first algorithm to the social graph to determine a dynamic organizational hierarchy. The method identifies a critical user community from a plurality of critical users in the dynamic organizational hierarchy. A plurality of security incidents are identified based on the dynamic organizational hierarchy by the prioritization analytics engine. Each security incident includes at least one of an alert, an event and an anomaly. The security incident is identified when a critical user is affected by the security incident by the prioritization analytics engine.

It is therefore an object of the present invention to provide a log-based serverless ontology method, for improving observability and incident response in managed serverless applications.

It another object of the present invention to provide a log-based serverless ontology method, for semi-structured managed serverless application logs and enabling the transformation of transaction-based data into a graph representation.

It is a further object of the present invention to provide a log-based incident response investigation tool that visualizes managed serverless applications' activity.

It still another object of the present invention to provide a log-based serverless ontology method that enables faster and easier understanding of the activity, which facilitates faster and more efficient cybersecurity incident response.

Other objects and advantages of the invention will become apparent as the description proceeds.

### Summary of the Invention

The scope of the invention is defined by the independent claims.

A serverless ontology framework, for improving observability and incident response in managed serverless applications, comprising:
a) by a computerized device/server with at least one processor, a memory and associated software, running a log-based managed serverless ontology for creating a structured graph-based activity representation for application logs;
b) a Perimeterless framework, adapted to:
c) construct activity Knowledge Graph (KGs) created by a parser to transform semi- structured activity logs into an activity knowledge graph; and
d) monitor and analyze activity logs for investigating and prioritizing cyber incidents.

The activity KGs may use AWS.

The serverless application activity logs may be collected by simulating benign and malicious activities.

The ontology may comprise:
a) a first procedure regarding the framework maintainer that constructs and maintains the ontology to provide structure for CSP log sources; and
b) a second procedure regarding how the log sources are automatically transformed into an activity KG.

The framework maintainer may be adapted to:
a) examine each new log source event format;
b) update the ontology with new or revised service entities and relationships;
c) incorporate the new or modified parsing process into a mapping module and the update procedure module; and
d) streamline the semi-structured log source data into a structured graph-based representation.

The activity Knowledge Graph may be constructed by:
a) processing the CSP activity logs;
b) importing the data from each log source and mapping the data in the graph-based representation by parsing the logs into graph representation triplets which are inserted into an activity KG database;
c) For each log event relationship, recording, by the activity KG, an event relationship; and
d) Storing predetermined relevant attributes.

The relevant attributes may be one or more of the following:
- Date;
- user agent;
- error message;
- region.

The framework may further comprise an Activity Enrichment Store adapted to:
a) update and acquire mappings of resource names, enrichment names, and enrichment values for resource enhancement; and
b) integrate the asset criticality ranking into application resources.

### Brief Description of the Drawings

The above and other characteristics and advantages of the invention will be better understood through the following illustrative and non-limitative detailed description of preferred embodiments thereof, with reference to the appended drawings, wherein:
- Fig. 1 shows a Perimeterless dashboard that uses graph-based representations to efficiently analyze cybersecurity alert incident investigation;
- Fig. 2 illustrates an Airline Booking architecture, according to an embodiment of the invention;
- Fig. 3 illustrates an Perimeterless stack, according to an embodiment of the invention;
- Fig. 4 is an Ontology visualization of the Perimeterless ontology OWL file using Protégé, according to an embodiment of the invention;
- Figs. 5-6 show a Perimeterless framework, according to an embodiment of the invention; and
- Fig. 7 shows the mean time and accuracy, according to an embodiment of the invention.

### Detailed Description of the Present Invention

The present invention provides the Perimeterless stack, a comprehensive four-layer security scheme for managed serverless environments based on the Perimeterless approach [35]. The four-layer security scheme consists of a generic managed serverless ontology (the serverless ontology involves the identification of activity (explicit) and contextual (implicit) entities and relationships within application activity logs, in order to generate a structured, graph-based representation of application behavior. To produce such a representation, the ontology mapped diverse application components, including compute, storage, and application resources, along with their roles and permissions. This information is recorded in the activity logs, including details about resources interacting with one another and the permissions being used), a generic CSP extension (CSP extension allows easily removing existing content security policy rules from any webpage. This extension is useful for web or mobile app developers or whenever it is desired to temporarily disable CSP rule.), a Perimeterless framework to construct activity Knowledge Graphs (KGs) using AWS, and two situational awareness tools. The Perimeterless framework was found effective in improving incident response task KPIs (MTTD, accuracy).

At the core of the proposed stack is a novel log-based ontology (the perimeterless ontology is based on serverless application logs and facilitates the transformation of these logs into an application activity knowledge graph, so as to categorize the assets within each business process into disjoint groups based on the asset's type) that enables the creation of a structured graph-based activity representation for application logs. To utilize the new ontology, the Perimeterless framework was developed to construct a single structured activity knowledge graph (KG - A knowledge graph, also known as a semantic network, represents a network of real-world entities-such as objects, events, situations or concepts-and illustrates the relationship between them. This information is usually stored in a graph database and visualized as a graph structure); This framework enables the development of activity- based tools to expand CSA capabilities.

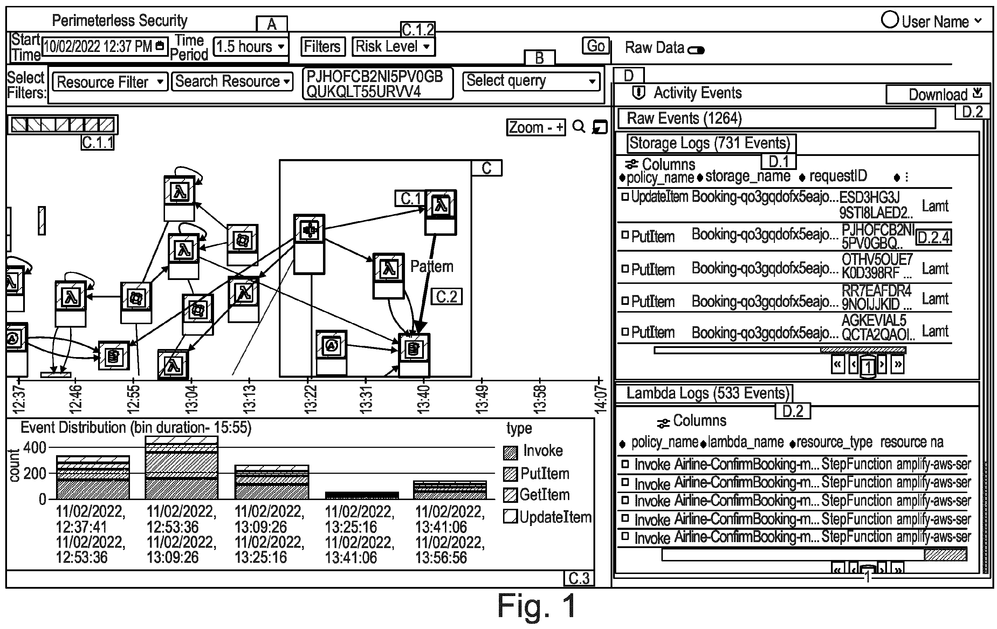

To demonstrate and evaluate the Perimeterless framework, the Perimeterless dashboard (Fig. 1) is an incident response tool, uses graph-based representations to efficiently analyze cybersecurity alert incident investigation. By applying the serverless ontology on an application's event logs, the dashboard provides a graph-based view of the application's resources and their interactions for a selected time window (A). Node (resource) types are indicated by the icons, and asset criticality rankings are indicated by the color of the node. For example, C.1 is an AWS Lambda function (a serverless compute service, that executes code in response to events, while handling compute resources), and its color indicates that its criticality rank is green, i.e., low criticality. The resource information (e.g., name, type, criticality) is displayed when selecting a single node. Events are represented by the edges, and the edge thickness indicates the number of events logged within the selected time window. The raw event logs are displayed on the right side of the dashboard (frame D), and the distribution of the event type is presented below the graph activity (frame C.3); both are filtered according to the selected group of resources (main frame C).

The framework's output, the activity KG, can be used to monitor and analyze activity logs and assist in investigating and prioritizing cyber incidents (prioritizing cyber incidents may be performed, for example, by a computerized device or a server with at least one processor, a memory and associated software). The proposed framework has three benefits:
(1) The framework does not require knowledge regarding the application's resources or code.
(2) It is based on standard application audit logs and thus does not access the application's data itself.
(3) The framework is designed as a standalone solution that does not require integration in the application; therefore, it does not add any additional overhead to the application's operations.

A proof of concept (PoC) has been implemented to evaluate the proposed framework, using real-world log data from a serverless application deployed on Amazon Web Services (AWS a cloud offering fully featured services from data centers, globally). To collect serverless application activity logs, a testbed was created to simulate benign and malicious activities.

A user study with 39 participants has been performed to evaluate the Perimeterless dashboard tool's effectiveness in improving security analysts' productivity in terms of their response time and ability to properly handle security alerts. As a baseline analytic tool, Microsoft Excel, which is a popular open-source log analysis tool for investigating cyber incidents [15, 23] was employed. Each participant was asked to perform five CSA tasks related to two cybersecurity scenarios: data leakage and denial of wallet, and they were assessed based on the time required to perform each task and the way in which they performed the task (their accuracy in analyzing the security incident). The evaluation results showed that security analysts using the Perimeterless dashboard outperformed those using the baseline tool in both respects.

The framework of the present invention has the following features:
(1) The Perimeterless framework provides a structure for semi-structured managed serverless application logs (semi-structured logs support both machines and humans, the logs consist of strings and objects. These logs usually need to be parsed into tables before they can be analyzed properly) by leveraging a unique ontology and enabling the transformation of transaction- based data into a graph representation.
(2) A graph-based incident response investigation tool is presented, which utilizes the Perimeterless framework representation to visualize managed serverless applications' activity. This visualization enables faster and easier understanding of the activity, which in turn facilitates faster and more efficient cybersecurity incident response. By using this representation, complex aggregations and queries can be performed during an alert investigation, reducing the MTTD and improving the overall cybersecurity posture of the system.

The present invention provides a CSP-managed serverless environment, where application developers use serverless functionality provided by a CSP to develop applications and services. Managed serverless CSPs enable application developers to focus on the actual logic required by the target application without the need for developing and maintaining the required underlying infrastructure [34].

Due to the fact that the application infrastructure is managed by the CSP, a shared responsibility model has emerged, in which developers are responsible for the application logic and data, and the responsibility of maintaining the environment, including the container management, hosted operating system, virtualization, server hardware, security, and network infrastructure, falls on the CSP. Under the new shared responsibility model, the application developer's responsibilities are reduced to just their application code and data. Due to the shared responsibility model, application maintainers, including security teams, have reduced observability of application execution since the CSP manages system logging and other environment resources, limiting access to contextual information [24]. Furthermore, from a security perspective, it is difficult to defend serverless applications with existing security capabilities which evolved in the non-managed world, as these measures require lower-level access to the underlying infrastructure, which is not accessible under the shared model. The inability to secure and harden the underlying infrastructure and the limited visibility into serverless applications' execution increases the need to leverage semi-structured managed serverless application logs to improve security capabilities. Typically, structured logging formats log data so it can be easily searched, filtered, and processed to enable more advanced analytics.

The proposed framework aims to address this need. Serverless architecture is most commonly used for APIs, stream/asynchronous processing, and time-based batch and operational tasks [17]. Applications with irregular workloads are also great candidates for serverless platforms, as they benefit from the built-in cost-saving scalability [17]. The serverless application domain includes four main categories of services: application integration, compute, storage, and IAM [5]. Each serverless CSP, including AWS3 Azure4 (cloud platform) and Google Cloud Platform (GCP)5 provides application developer the following services/building blocks to build a serverless application:
- Serverless **functions** - also known as function as a service (FaaS), a fully managed compute service model that allows developers to run their code without provisioning or managing servers. The CSP is responsible for scaling, deploying, and managing the underlying infrastructure, while the developer is only responsible for writing and deploying their code [11].
- **Serverless storage resources** -

The CSP offers serverless storage services, such as object storage and NoSQL tables. These services provide a number of benefits, such as automatic scalability, built-in availability, and no charge for idle capacity [28].
- **Serverless application components - These** are ready-made and reusable software components that can be used for orchestrating and managing serverless applications, such as GraphQL APIs, function workflow management tools, and notification and event triggering services [18].
- **Identity and Access Management (IAM)** - Any action or access to resources performed in the CSP serverless environment is controlled and managed by the IAM framework, which sets the permissions and policies for individuals and groups [27]. Attribute-Based Access Control (ABAC) is a popular approach for managing permissions in cloud environments. With ABAC, permissions are granted based on the attributes of the user and the resource being accessed. This approach has following advantages: (1) provides fine-grained access control and can help reduce the number of role assignments required; (2) provides greater flexibility and enables dynamic access control decisions based on the attributes of the user and resource [9]; (3) provides lower management costs compared to the traditional Role-Based Access Control access (RBAC- restricts network access based on a person's role within an organization and has become one of the main methods for advanced access control); and (4) it can be translated from existing RABC framework [8].

The demonstration and evaluation of the proposed framework were performed on the AWS serverless infrastructure. A testbed serverless application and simulator were created to simulate application activity. The testbed application uses (i) AWS Lambda to implement serverless functions; (ii) AWS Simple Storage Service (S3) as a data storage service; (iii) AWS DynamoDB as a database service; (iv) EventBridge - a serverless bus event that is used to trigger event-driven functions (e.g., trigger Lambda functions on timed events) [4]; (v) API Gateway - a service that enables the maintenance of RESTful APIs; in the evaluation testbed, the application was designed to receive API requests from users, and in response, the API gateway service activates the corresponding Lambda functions [3]; and (vi) Step Function - a workflow service that is used to orchestrate microservices, build pipelines using AWS services, and combine multiple Lambda functions in responsive serverless applications and microservices [6]; the Step Function service allows us to orchestrate complete application workflows. To collect the application activity logs, the following monitoring and application logging tools were used:
- **CloudTrail** - This service provides logs for every API call in the cloud environment. These API calls may be a database operation, invocation of a serverless function, or any other use of an AWS
- service by the function.
- **CloudWatch** - This is a log monitoring and management service for the CloudTrail logs.

To demonstrate and evaluate the proposed Perimeterless framework, the "Airline Booking" serverless application deployed on top of AWS was used. This application is well-described in the literature and is commonly used as a benchmark for research [16]. As in a typical real-world setting, the application produces activity logs, which serve as input for analysis. The application can be found via the following GitHub link.8

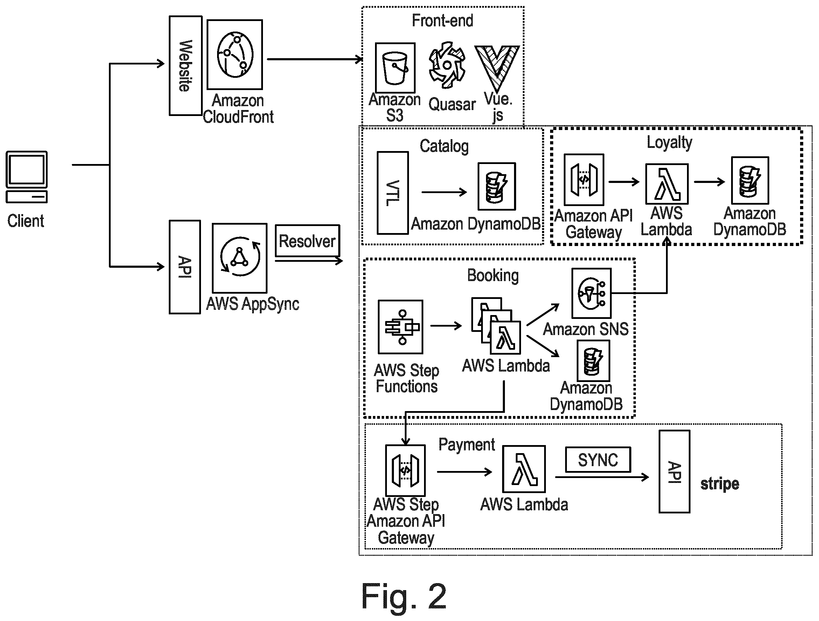

The Airline Booking application consists of several AWS serverless services: four DynamoDB tables, four S3 buckets, the SQS (queue) and SNS (notification) services, the AppSync (AWS AppSync enables developers to connect their applications and services to data and events with secure, serverless and high-performing APIs) API service, and 12 Lambda functions. The AWS CloudTrail service was utilized to record the API activity of the application's storage and functions. There are two main types of business processes (a business process is a set of logically related tasks or activities performed to achieve a defined business outcome) in the Airline Booking application's architecture, as shown in Fig. 2: the first type of a business process is based on a short-timed serverless function which facilitates access to a data source in the system. It comprises the Catalog and Loyalty processes which fetch information from a DynamoDB table and return the data to the user (the flight catalog and loyalty points, respectively).

The second type is the Booking process, which is kicked off by an API request to book a flight and triggers a series of data access operations and Lambda function invocations in order to to complete a flight booking transaction. The booking process is data-driven, depending on the user's previous action, like choosing available seats on a selected flight, viewing the loyalty point balance, changing an existing booking, etc.

### Testbed

A cloud-based testbed which enables to run a serverless application (e.g., Airline Booking) in a controlled environment and monitor the application's execution was created by collecting the activity logs. The activity logs derived from the controlled environment of the tesbed allows performing analysis and evaluation. In order to emulate benign and anomalous activity in the testbed, a simulation script with multiple application use scenarios has been executed. An AWS CloudTrail logging has been configured and activated management and event data logging on all of the cloud resources. The activity log data from the application was collected from the AWS CloudWatch audit logs; these logs include information about cloud resource operations (HTTP and event-triggered) and the permissions used.

The simulation script allowed to mimic traffic and user behavior in order to create realistic application use scenarios. Activity logs were generated for each scenario, allowing to further analyze the behavior of components comprising the application. Simulations and recordings of the serverless application were performed by creating Python scripts that activate functions logically, just as a typical application user (client or customer) would, as well as simulations of errors that might occur if the user was not well versed in the application. Then, several attacks have been implemented by modifying the logic of some Lambda functions. The simulation starts when the script - simulating a user - opens the browser with the address of the application and performs one of the following actions at random: booking a flight, checking the loyalty point balance, or checking existing flight bookings. Each action triggers a different business process and can also result in different action sequences. For example, a booking could be one- or two-ways; if the booking chosen by the script is one-way, a random airport from a list will be serve as the departure location while another will serve as the arrival location.

**Attack scenarios** - During simulations, the application is primarily run in a benign setting (benign mode). To simulate an attack, in some of the application runs, the logic of some serverless functions was modified to simulate an attack (anomaly mode). The anomaly mode was implemented in approximately 2% of the runs. The simulated attack scenarios are:
(1) **Data Leakage** - the confirm booking Lambda function has been modified so that instead of sending the data to private storage, and sent to a publicly accessible bucket.
(2) **Denial of Wallet (DOW)** - the reserve booking Lambda function was modified to execute multiple dummy directed API requests to a DynamoDB table, with the intention of depleting its allocated budget.

Two data source services were chosen to monitor activity, primarily because similar monitoring tools from Azure and Google Cloud have comparable capabilities [19]. CloudTrail - This service provides log collection for each API call interacting with the monitored resource. These API calls might be a CRUD operation (four basic operations of persistent storage: Create, Read, Update, and Delete) on a table in a database, a call to an internal function, or any other use of an AWS service. For each application to be monitored and collect logs from, a "trail" was created by manually selecting the resources to be monitored (whose logs will be collected), such as S3 (Amazon S3 is an object storage service that stores data as objects within buckets, where a bucket is a container for objects), Lambda functions (anonymous functions written in a way that allows them to perform short specific operations, without requiring complete functions), DynamoDB (a fully managed proprietary NoSQL database offered by Amazon.com), etc. CloudWatch - This service enables to manage, group, and analyze the logs obtained from CloudTrail trails. It should be noted that similar monitoring tools with the same capabilities are available by other cloud providers such as Azure and Google Cloud [19].

### PERIMETERLESS STACK

Perimeterless stack is described in Ben-Shomol et al: "Observability and Incident Response in Managed Serverless Environments Using Ontology-Based Log Monitoring", https://arxiv.org/html/2405.07172v1. The proposed Perimeterless framework for managed serverless applications is designed to improve the cybersecurity observability and incident response capabilities of application security maintainers (including application developers and security teams).

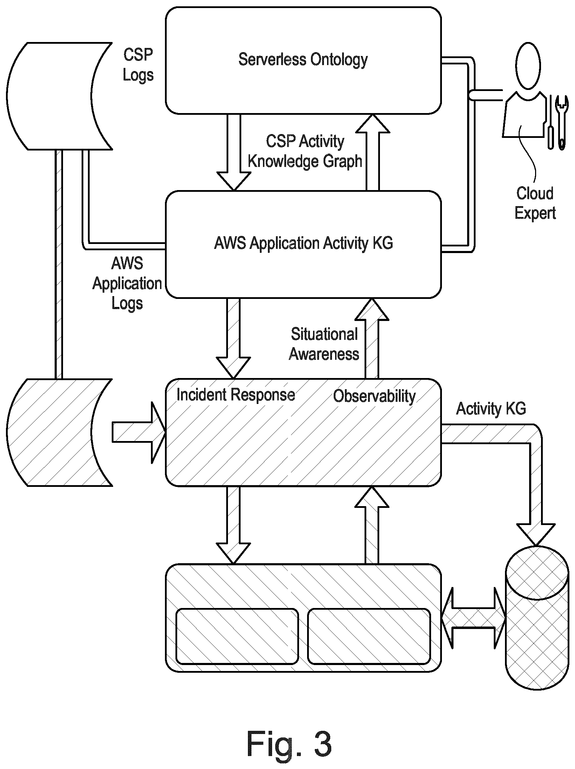

The framework is implemented according to the four- scheme presented in Fig 3. In the first layer, the Serverless Ontology and the ontological entities and relationships of serverless applications in managed environments (e.g., serverless function) are defined. In the second layer, the CSP Activity Knowledge Graph extends the ontology to support a specific CSP (for example, AWS). In the third layer, the AWS Application Activity Knowledge Graph is generated by applying CSP-specific knowledge to the activity logs of an application. In the last layer, called the Situational Awareness. The application's activity knowledge graph is leveraged for various tasks, including incident response and observability.

### Serverless Ontology for Managed Environments

The development of a serverless ontology involves the identification of activity (explicit) and contextual (implicit) entities and relationships within application activity logs to generate a structured, graph-based representation of serverless application behavior. Activity logs may be collected by simulating benign and malicious activities.

Explicit entities are derived directly from the API activity logs, forming a single relationship representing a log event. The implicit entities and relationships are identified in order to provide additional contextual relationships based on log information (e.g., roles that are used or resources that are granted access).

To produce such a representation, diverse application components, including compute, storage, and application resources, are mapped, along with their roles and permissions. This information is recorded in the activity logs, including details about resources interacting with one another and the permissions being used.

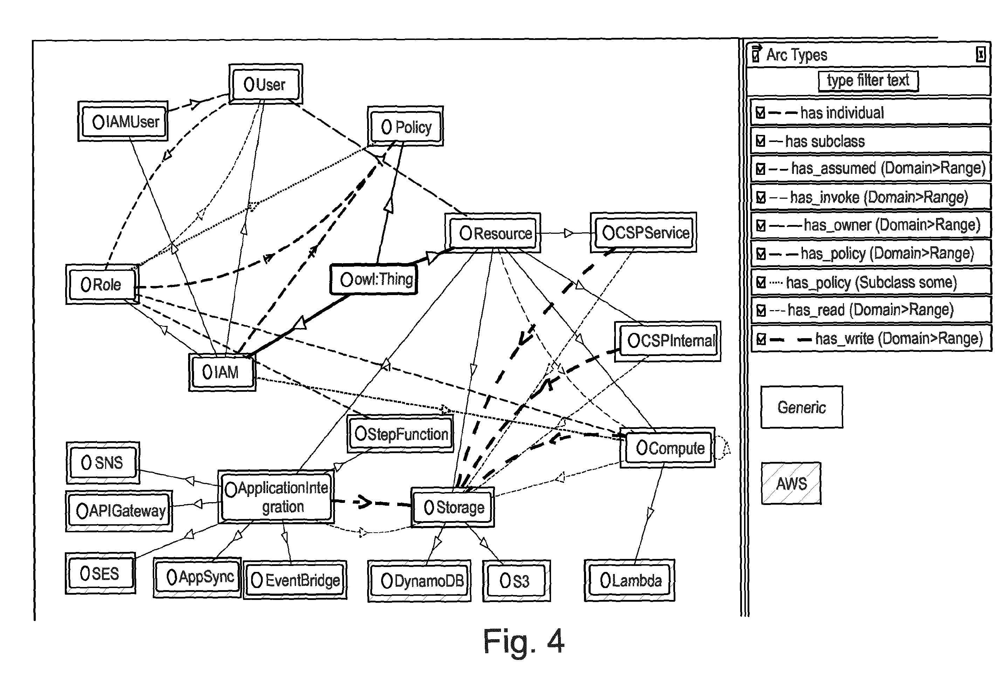

As a way to define the ontology entities and their relationships, the OWL modeling language has been used to construct a graph representation of the serverless application's activity logs (as shown in Fig. 4). This graph contains generic managed serverless application entities (in gray) and a use case AWS service mapping (in orange). The solid blue lines represent inheritance relationships between the entities, denoted by the "has_subclass" property. In contrast, the dashed lines represent implicit relationships between the entities. For example, the storage class represents the managed data sources and is related to the resource entities through the following implicit
relationships: (1) it is a subclass of the resource entity, (2) it has an owner (inherited from the resource class), and (3) it implicitly indicates read/write access from other resources. The ontology facilitates the transformation of multiple serverless application log sources into a unified graph-based representation format, which in turn contributes to enhanced observability and effective incident response (data ontology is a structured and organized representation of knowledge about a specific domain).

The proposed ontology provides a formal graph- based representation of serverless application activity. The nodes correspond to the application resource entities and IAM identities, and the edges denote the activity log or contextual relationships between the nodes. Specifically, the human expert inspects each log source's format to map and define the application resource entities and IAM identity information in the ontology. In serverless environments, some resources requires to "assume" IAM role in order to perform actions (e.g., function access a storage table), while other resources are core serverless services that provide policy upon application deployments (e.g., flow-management, queue, and notification services). To address the difference in IAM use among the various services, the role is created as an implicit entity, separate from the resource that assumes it.

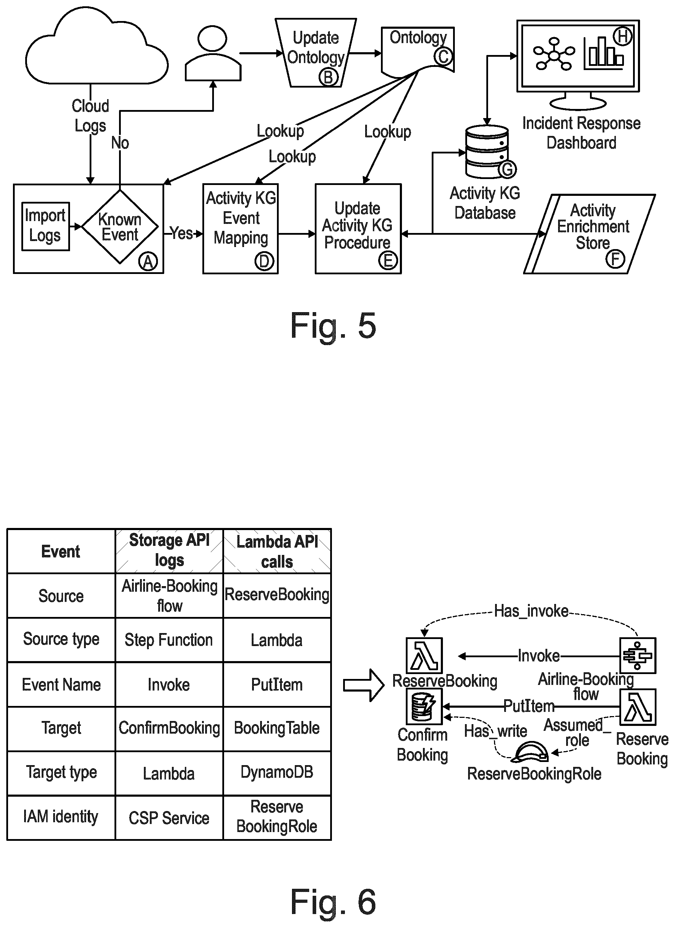

Fig. 6 shows a Perimeterless framework. The table on the left contains two types of application activity log sources: function invocation and storage access. Using the Perimeterless ontology mapping, the event log fields are mapped to the activity description and create the activity-based graph on the right. Invoke event - The extracted relationship describing the serverless flow management service, Airline Booking flow (step function), invoking the serverless function, ConfirmBooking (Lambda). In the Lambda invocation event log, the Airline Booking flow uses a temporal role to access the function, but it is allowed to do so as part of the permissions of this service instance. Putltem - This event represents a data access performed by a function. The ReserveBooking function must use the role assigned to it to perform actions. The function assumed by the role provided to it, ConfirmBookingRole, is to access the BookingTable DynamoDB instance. In addition to the Invoke and Putltem events' representation, the permission usage representation in activity is also available.

The resource that uses an assumed role is connected to the implicit role with a has_assumed relationship, and the role is connected to the target resource representing the permission with the has_policy implicit relationship. Additionally, to distinguish write/read actions to each storage resource, an implicit relationship of has_write/has_read is added.

### Ontology Entities

Application resources cover a variety of serverless services, while IAM identities denote the roles and users associated with a specific application. As depicted in Fig. 4, the IAM identities are:
(1) User - represents the root account name or ID; the owner of the application.
(2) Role - defines a set of permissions and access policies, which can be assumed by authorized users or resources to perform certain tasks within the cloud environment.
(3) IAMUser - a managed IAM (Identity and Access Management) identity created by a user capable of switching between roles (with different permissions) to perform various tasks.
(4) Policy - denotes policy permissions (e.g., PutObject used by a function for storing an object in storage service).

Regarding the application resources, in managed serverless environments, CSPs offer numerous services for designing and deploying serverless applications.

Essentially, every application resource is an instance of a serverless service, and its owner is the user who created it. When mapping each service, abstract categories were used to group services with a common activity representation. For instance, the ApplicationIntegration category represents multiple logic/rule-based serverless services, such as AWS Simple Notification Service (SES - a managed service that provides message delivery from publishers to subscribers), AWS EventBridge (a service that provides real-time access to changes in data in AWS services, your own applications, and software as a service (SaaS) applications without writing code. ), and AWS StepFunction (flow management - visual workflow service that helps developers use AWS services to build distributed applications, automate processes, orchestrate microservices, and create data and machine learning (ML) pipelines.). These services can access storage (inherited from Application Integration) and invoke serverless compute services, and are owned by the user (both of which are inherited from the resource entity). Using the activity logs as the only data source can result in some ambiguity in the recorded actions due to multiple entry points (APIs). Unknown or new API audit logs are defined in generic CSPService and CSPInternal to represent new services and entry points, respectively. The serverless resources include (see Fig. 4):
(1) Compute - serverless functions, the core compute component of the serverless application.
(2) Storage - the application data and databases.
(3) Applicationlntegration - includes various managed application building blocks.
(4) CSPService - represents new, unmapped service instances in the activity logs.
(5) CSPInternal - used as a placeholder for unmapped CSP environment service entities (e.g., trigger rule, scheduled event).

**Ontology Relationships** - for the activity logs, the application activity formulates two types of relationships, explicit and implicit. This separation is crucial, since each resource interaction can have different IAM identities in the background, even for the same resource (e.g., a function execution using two distinct roles and assigned permissions).

**Explicit Relationships** - represents the cloud resources' interaction as an event relationship between resource A and resource B (e.g., A performed an API event on B). Therefore, each API event log recorded is translated into an explicit relationship where its attribute contains the event information (event name, source IP, region, etc.). For example, as depicted in Fig. 6, the ReserveBooking function performs a *Putltem* event on the ConfirmBooking table; the function and the table represent the explicit entities; and the *Putltem* action is the explicit event relationship involving them. Resources or IAM instances can be explicit entities, except for the policy entity, which is synthetic and does not represent a real resource, representing the activity IAM policy usage (as shown in Fig. 4).

**Implicit Relationships** - represents the additional information that can be retrieved from the logs (IAM identity and permission use). These ontological relationships of each activity help create a context overlay on the application activity. The implicit entity can be an IAM resource in use (e.g., a function assuming an IAM role to access another resource) or a synthetic entity (e.g., a step function invokes another function). The implicit relationships are presented in the legend of Fig. 4 and defined as follows:
(1) has_subclass - an ontological inheritance relationship.
(2) has_assumed - data property, use of IAM roles by resources.
(3) has_invoke - data property, use of application function (invoking Lambda function instance).
(4) has_owner - data property, linking resources with their owner.
(5) has_policy - data property, a synthetic implicit relationship to the policies in use (a policy is a synthetic entity).
(6) has_read / has_write - data property, to distinct read/write access to storage services using the read only flag.

The proposed ontology, based on generic managed serverless activity logs, enables to create a parser to transform the semi- structured activity logs into an activity knowledge graph.

### CSP Activity Knowledge Graph

This feature presents the procedures required to create the application activity KG using the Perimeterless framework. In the proposed framework, as presented in Fig. 4, the ontology was used to perform two procedures. One procedure pertains to how the framework maintainer constructs and maintains the ontology to provide structure for CSP log sources (a log source is a data source that creates an event log), and the other pertains to how the log sources are automatically transformed into an activity KG.

### Ontology Construction and Maintenance

Since the Perimeterless ontology serves as an abstraction of serverless services, to apply its representation to new CSP activity logs, the framework maintainer (A) examines each new log source event format and updates the ontology with new or revised service entities and relationships. After the ontology has been updated, the framework maintainer must incorporate the new or modified parsing process into the mapping module (D) and the update procedure module (E). This approach streamlines the semi-structured log source data into a structured graph-based representation and guarantees the precision of the mapping procedure.

**Knowledge Graph Construction** - In this procedure the CSP activity logs are processed into an activity KG. The data from each log source is imported (A) and mapped in the graph-based representation (D). The mapping process parses the logs into graph representation triplets (e.g., my-function, GetObject, my-bucket) which are inserted (E) in the activity KG database (G). For each log event relationship, the activity KG records the explicit relationship, referred to as an event relationship, and stores relevant attributes (e.g., date, user agent, error message, region).

### AWS Application Activity KG

To demonstrate the applicability of the Perimeterless framework for managed serverless applications, the Perimeterless framework was applied to AWS logs from a demo application, Airline Booking. AWS CloudTrail was used to collect API calls and data access events for the application resources, with one log source containing API calls to the application functions and another containing data access events for the application data resources. These logs were parsed according to the Perimeterless ontology to construct a graph representation of the application's activity (as shown in Fig. 6). For each new or modified API log format, the framework maintainer can update the ontology as described above. Fig. 6 shows how the Putltem event is mapped in the /app application as follows:
(1) Extract the event name from the *eventName* field.
(2) Identify the source entity for the event using the *userAgent* field (A user agent is a string of text that is sent by a web browser to a web server to identify itself and provide information about the browser's capabilities). This field provides information on the function environment, which enables the identification of the serverless function.
(3) Identify the target resource using the *eventSource* field, the event creator service type.
(4) Derive the IAM entity and role name (if used) from the *userIdentity_type* and *userIdentity_principalId* fields, respectively.
(5) Retrieve the target source storage name (DynamoDB table or S3 bucket) from the *requestParameters_tableName* or *requestParameters_bucketName* field, respectively.

### Situational Awareness Applications

The final layer of the Perimeterless stack (shown in Fig. 3) focuses on leveraging the application's activity KG for situational awareness capabilities. Two tools to enhance situational awareness capabilities using the proposed framework: activity enrichment (F) and Perimeterless dashboard (H) have been introduced.

**Activity Enrichment** - The Activity Enrichment Store (F in Fig. 5) functions as an update module designed to acquire mappings of resource names, enrichment names, and enrichment values for resource enhancement. This store allows the seamless integration of additional activity enrichment into resources without requiring direct modifications to the resources themselves. By leveraging a graph database, the activity graph of resources can be improved, enabling the concurrent enrichment of multiple resources. Within the Perimeterless framework, an Activity Enrichment Store (F) is utilized to integrate the asset criticality ranking into application resources, serving as an example of its broader applicability to various enrichment methods.

**Perimeterless Incident Response Dashboard** - The dashboard (H) offers a range of functionalities that enable security teams and developers to interact with the framework's activity KG representation. By using the dashboard, users can swiftly identify patterns, dependencies, and anomalies in application activity while leveraging its filtering, search, and query capabilities, thereby improving alert investigation task performance.

The Incident Response Dashboard (H) includes an extensive range of log exploration features, empowering users and enabling them to interact with the graph-based activity data effectively. These features include:
- A graphical representation of application activity, promoting comprehensive understanding of the system.
- Time window filtering capabilities, enabling the examination of data within specific time windows.
- Resource filtering options, allowing users to focus on relevant components within the system.
- Resource search functionality, facilitating rapid identification of specific resources.
- Specific relationship search features, enabling analysis of connections between resources.
- Presentation of raw log data, providing users with the most detailed information available.
- Query execution using the Perimeterless framework database, supporting advanced data retrieval and analysis.
- Display of event distribution based on selected time windows and resources, offering a broader perspective on system events.
- Generation of reports, including the current graph view configuration and logs, enabling findings to be documented and communicated.
- Visualization-based enrichment of the graph view via enrichment modules (e.g., asset criticality ranking), enhancing the context of the displayed data.

To assess the CSA capabilities when using the Perimeterless framework, a user study involving manual log examination and analysis has been performed. The aim of the user study was to compare participants' detection time and accuracy when working with the baseline incident response investigation tool (Excel Workbook) and the proposed Perimeterless dashboard. The time it took for the participants to perform incident response tasks (detection and aggregation) has been measured and their accuracy in performing them during the investigation. Two incident response key performance indicators (KPIs) were selected: (1) Mean Time To Detect (MTTD), and (2) task accuracy. Reducing the MTTD and increasing task accuracy is crucial in cybersecurity alert investigations.

The user study involved 39 participants: 28 male and 11 female computer engineering students (25 B.Sc. students and 14 M.Sc. students). A pre-questionnaire was used to assess the participants' prior knowledge and expertise in serverless computing, cloud computing, and cybersecurity log investigation. The participants rated their expertise on a scale of one to five; the average score was below 2.6 with a variance of less than one for all questions, indicating limited experience in cloud environments. To ensure that participants were adequately prepared, training sessions were held on the Excel dashboard and Excel tools to familiarize participants with the experimental protocol.

### Experimental Protocol

Before the experiment, a 25-minute presentation was delivered to familiarize the participants with the serverless environment, its services, and serverless API audit logs, and to demonstrate the functionality of a serverless application. They were also given an overview of various cybersecurity incidents they may encounter. Following the presentation, each participant was provided with 15 minutes of hands-on training on one of the tools utilized in the study (either Excel or the Perimeterless dashboard). This was done to ensure that the participants were proficient in performing the incident response tasks. The training was designed in the form of Do-It-Yourself (DIY) missions, which reflected the incident response tasks examined in the study. After the hands-on training, participants were asked to complete an incident response online questionnaire as they performed five incident response tasks in two simulated cybersecurity scenarios: data leakage and denial of wallet. The duration of the experiment was 80 minutes.

Prior to each investigation task, the participants were told the goal of the task and received instructions on how to approach it and other relevant information. To distinguish between the time spent learning about the task objectives and the time spent completing the task, a brief screen was created. This screen appeared before each task and displayed the same information about the task but did not include fields for answers. During this time, the participant was not permitted to use the tool. When the participant navigated to the next page, the timer was initialized, and the participant was allowed to access the tool and complete the task fields in the questionnaire. Since each investigation task is divided into subtasks, knowledge of the correct response for each subtask is crucial to moving forward and completing the task. Therefore, each task, regardless of the participant's response in the previous task, the correct response was provided to minimize trailing errors.

**Data leakage** - This scenario involved participants investigating an alerted serverless function that performed unwanted access to private storage. The compromised function, designed to work with public storage, is manipulated to gain access to sensitive data, resulting in a potential data leak. The investigation process involved the following steps: (1) Locating the alert event using the unique event identifier and extracting the resources and event name. (2) Counting the number of resources that interacted with the extracted resources in two different time windows. (3) Determining the storage (name and type) in which the alerted function was accessed during the two time windows.

**Denial of wallet attack** - In this scenario, participant were tasked with investigating a given function in the Airline Booking application. The targeted function was observed to repeatedly make API calls to access a data source, resulting in an increase in both data transmission and execution time. The investigation task consisted of the following steps: (1) Identifying the suspected function using the alert unique event identifier and retrieving of all relevant function interactions. (2) Evaluating the interaction volume across three time windows to determine if the increased volume of function invocations indicates a denial of wallet attack (DoW) directly targets the wallet, intending to drain the financial resources of a company or individual).

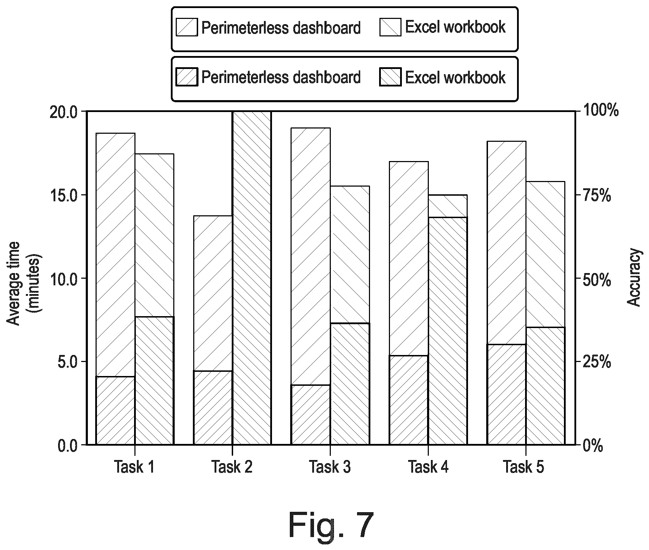

In the experiment, participants utilizing the Perimeterless dashboard demonstrated superior performance compared to those using Excel in terms of two KPIs: MTTD and accuracy of task results. The MTTD for all tasks was shorter when using the Perimeterless dashboard, as seen in Fig. 7. Significantly faster MTTD obtained on four of the five tasks by the Perimeterless dashboard compared to Excel, proven statistically using a t-test 2. The Perimeterless dashboard also had higher average accuracy scores than Excel on all five tasks, as seen in Table 1.

Table 1 shows mean accuracy score and mean time to complete each task (in minutes). For each task, bold values indicate better performance.

**Table 1**

| Task | Baseline | Perimeterless |
|---|---|---|
| T1 | 7.513 | **4.063** |
| T2 | 24.841 | **4.382** |
| T3 | 6.529 | **3.663** |
| T4 | 12.990 | **5.387** |
| T5 | 7.442 | **5.712** |

**Table 2: T-test results**

| Task | p-value | t-statistic |
|---|---|---|
| Task 1 | -5.268 | 1.092e-05 |
| Task 2 | -6.950 | 1.016e-07 |
| Task 3 | -2.795 | 0.009 |
| Task 4 | -5.343 | 8.839e-06 |
| Task 5 | -1.645 | 0.110 |

During the experiment, it was observed that the training in the use of the Excel tool took more time than that of the dashboard, specifically in the use of constructing pivot tables to aggregate the data; it took participants using the Perimeterless dashboard an average of 44.3 minutes to perform the tasks and complete the questionnaire compared to 81.5 minutes for those using Excel. Participants with little or no Excel Workbook experience utilized pivot tables, as they only need to be set up once per log source, and a step-by-step tutorial was provided. Following the experiment, the participants who used Excel reported that using the pivot table was not intuitive and took more time than they expected. A pivot table is required for one task and optional for the others, but it makes aggregation and filtration easier and can be used to perform other tasks. While tasks two and four, which involved creating pivot tables, took over twice as long with the Perimeterless dashboard compared to Excel, tasks one, three, and five were quicker to complete using the dashboard since participants could utilize the previously created pivot tables.

### REFERENCES

[1] Cloud Sercurity Alliance. 2021. Cloud Incident Response. https:// cloudsecurityalliance.org/research/working-groups/cloud-incident-response/.
[2] Kalev Alpernas, Cormac Flanagan, Sadjad Fouladi, Leonid Ryzhyk, Mooly Sagiv, Thomas Schmitz, and Keith Winstein. 2018. Secure serverless computing using dynamic information flow control. arXiv preprint arXiv:1802.08984 (2018*).*
[3] AWS. 2021. Amazon API Gateway. https://aws.amazon.com/api-gateway/.
[4] AWS. 2021. Amazon EventBridge. https://aws.amazon.com/eventbridge/.
[5] AWS. 2021. AWS Documentation. https://docs.aws.amazon.com/index.html.
[6] AWS. 2021. AWS Step Functions. https://aws.amazon.com/step-functions/.
[7] Christian Banse, Immanuel Kunz, Angelika Schneider, and Konrad Weiss. 2021. Cloud Property Graph: Connecting Cloud Security Assessments with Static Code Analysis. In 2021 IEEE 14th International Conference on Cloud Computing (CLOUD). IEEE, 13-19.
[8] Gunjan Batra, Vijayalakshmi Atluri, Jaideep Vaidya, and Shamik Sural. 2019. Deploying ABAC policies using RBAC systems. Journal of computer security 27, 4 (2019), 483-506.
[9] ST Bharathi and C Bala Subramanian. 2022. Trust in Cloud: Perspective from Access Control Models and Machine Learning-A Detailed Study. In 2022 International Conference on Inventive Computation Technologies (ICICT). IEEE, 153-160.
[10] Nevil Brownlee and Erik Guttman. 1998. Expectations for computer security incident response. Technical Report.
[11] Paul Castro, Vatche Ishakian, Vinod Muthusamy, and Aleksander Slominski. 2017. Serverless programming (function as a service). In 2017 IEEE 37th International Conference on Distributed Computing Systems (ICDCS). IEEE, 2658-2659.
[12] Paul Castro, Vatche Ishakian, Vinod Muthusamy, and Aleksander Slominski. 2019. The rise of serverless computing. Commun. ACM 62, 12 (2019), 44-54.
[13] CyberWire. 2022.Breach at major publisher. Data subjects directly extorted. Delayed notification. Ransomware at media outlet. https://thecyberwire.com/newsletters/privacy-briefing/4/243.
[14] Pubali Datta, Prabuddha Kumar, Tristan Morris, Michael Grace, Amir Rahmati, and Adam Bates. 2020. Valve: Securing function workflows on serverless computing platforms. In Proceedings of The Web Conference 2020. 939-950*.*
[15] Yuri Diogenes and Erdal Ozkaya. 2019. Cybersecurity-Attack and Defense Strategies: Counter modern threats and employ state-of-the-art tools and techniques to protect your organization against cybercriminals. Packt Publishing Ltd.
[16] Simon Eismann, Diego Elias Costa, Lizhi Liao, Cor-Paul Bezemer, Weiyi Shang, André van Hoorn, and Samuel Kounev. 2022. A case study on the stability of performance tests for serverless applications. Journal of Systems and Software 189 (2022), 111294. https://doi.org/10.1016/j.jss.2022.111294
[17] Simon Eismann, Joel Scheuner, Erwin Van Eyk, Maximilian Schwinger, Johannes Grohmann, Nikolas Herbst, Cristina L Abad, and Alexandru losup. 2020. Serverless applications: Why, when, and how? IEEE Software 38, 1 (2020), 32-39.
[18] Simon Eismann, Joel Scheuner, Erwin Van Eyk, Maximilian Schwinger, Johannes Grohmann, Nikolas Herbst, Cristina L Abad, and Alexandru losup. 2021. The state of serverless applications: Collection, characterization, and community consensus. IEEE Transactions on Software Engineering 48, 10 (2021), 4152-4166.
[19] Google. 2022. Compare AWS and Azure services to Google Cloud. https://cloud. google.com/free/docs/aws-azure-gcp-service-comparison.
[20] Deepak Sirone Jegan, Liang Wang, Siddhant Bhagat, Thomas Ristenpart, and Michael Swift. 2020. Guarding serverless applications with seclambda. arXiv preprint arXiv:2011.05322 (2020).
[21] Yonghwan Kim, Jahwan Koo, and Ung-Mo Kim. 2022. Vulnerabilities and Secure Coding for Serverless Applications on Cloud Computing. In International Conference on Human-Computer Interaction. Springer, 145-163.
[22] Philipp Leitner, Erik Wittern, Josef Spillner, and Waldemar Hummer. 2019. A mixed-method empirical study of Function-as-a-Service software development in industrial practice. Journal of Systems and Software 149 (2019), 340-359.
[23] Fayaz Ahmad Loan, Bashir Bisma, and Nasreen Nahida. 2022. Global research productivity in cybersecurity: a scientometric study. Global Knowledge, Memory and Communication 71, 4/5 (2022), 342-354.
[24] Eduard Marin, Diego Perino, and Roberto Di Pietro. 2022. Serverless computing: a security perspective. Journal of Cloud Computing 11, 1 (2022), 1-12.
[25] MarketsandMarkets. 2020. Serverless Architecture Market by Service Type (Automation and Integration, Monitoring, API Management, Security, Analytics, and Design and Consulting), Deployment Model, Organization Size, Vertical, and Region - Global Forecast to 2025. https://www.marketsandmarkets.com/Market-Reports/serverless-architecture-market-64917099.html
[26] Otgonpurev Mendsaikhan, Hirokazu Hasegawa, Yukiko Yamaguchi, and Hajime Shimada. 2020. Quantifying the significance and relevance of cyber-security text through textual similarity and cyber-security knowledge graph. IEEE Access 8 (2020), 177041-177052.
[27] Ishaq Azhar Mohammed. 2019. Cloud identity and access management-a model proposal. International Journal of Innovations in Engineering Research and Technology 6, 10 (2019), 1-8.
[28] Tetiana Naumenko and Anatolii Petrenko. 2021. Analysis of problems of storage and processing of data in serverless technologies. Technology audit and production reserves 2, 2 (2021), 58.
[29] Netwrix. 2021. Why Cloud Technology Is Expected To Dominate 2021. https://www.forbes.com/sites/forbestechcouncil/2021/03/09/why-cloud- technology-is-expected-to-dominate-2021/.
[30] Matthew Obetz, Stacy Patterson, and Ana Milanova. 2019. Static Call Graph Construction in {AWS} Lambda Serverless Applications. In 11th USENIX Workshop on Hot Topics in Cloud Computing (HotCloud 19).
[31] Fatemeh Khoda Parast, Chandni Sindhav, Seema Nikam, Hadiseh Izadi Yekta, Kenneth B Kent, and Saqib Hakak. 2022. Cloud computing security: A survey of service-based models. Computers & Security 114 (2022), 102580.
[32] Isaac Polinsky, Pubali Datta, Adam Bates, and William Enck. 2021. SCIFFS: Enabling Secure Third-Party Security Analytics using Serverless Computing. In Proceedings of the 26th ACM Symposium on Access Control Models and Technologies. 175-186.
[33] The Open Web Application Security Project. 2021. OWASP Serverless Top 10 serverless application security vulnerabilities. https://owasp.org/www-project- serverless-top-10/.
[34] RedHat. 2021. What is serverless? https://www.redhat.com/en/topics/cloud- native-apps/what-is-serverless.
[35] Scott Rose, Oliver Borchert, Stu Mitchell, and Sean Connelly. 2020. Zero trust architecture. Technical Report. National Institute of Standards and Technology.
[36] Arnav Sankaran, Pubali Datta, and Adam Bates. 2020. Workflow integration alleviates identity and access management in serverless computing. In Annual Computer Security Applications Conference. 496-509.
[37] Hossein Shafiei, Ahmad Khonsari, and Payam Mousavi. 2022. Serverless computing: a survey of opportunities, challenges, and applications. Comput. Surveys 54, 11s (2022), 1-32.
[38] Jai Vijayan. 2022. Big Questions Remain Around Massive Shanghai Police Data Breach. https://www.darkreading.com/cloud/questions-massive-shanghai-police- data-breach.
[39] C Zimmerman. 2014. Ten Strategies of a World-Class Cybersecurity Operations Centre. The Mitre Corporation.

## Claims

1. A serverless ontology framework, for improving cybersecurity observability and incident response in managed serverless applications, comprising:
a) a computerized device/server with at least one processor, a memory and associated software, running a log-based managed serverless ontology (C) for identifying explicit and implicit ontological entities and relationships within semi-structured application activity logs and for creating a structured graph-based activity representation (D) for the semi-structured application activity logs; and
b) a Perimeterless framework providing a structure for the semi-structured application activity logs whereby event log fields are mapped to an activity description and create an activity-based graph, the Perimeterless framework adapted to:
monitor and analyze the semi-structured application activity logs for investigating and prioritizing ,
**characterized in that** the Perimeterless framework is a Perimeterless security framework unintegrated within an application architecture, wherein the Perimeterless framework is additionally adapted to monitor and analyze the semi-structured application activity logs for investigating and prioritizing cyber incidents, and to construct one or more activity Knowledge Graph, KG, representing a network of real-world entities, illustrating a relationship between the real-world entities and created by a parser, to transform the semi-structured application activity logs into the one or more activity KG,
wherein the Perimeterless framework is implemented according to a four-layer scheme configured such that:
i. a first layer defines the serverless ontology (C) and ontological entities and relationships of serverless applications in managed environments;
ii. in a second layer, the activity KG extends the serverless ontology to support a specific cloud service provider**,** CSP;
iii. in a third layer, a specific CSP KG is generated by applying CSP-specific knowledge to the semi-structured application activity logs; and
iv. in a fourth layer, the specific CSP KG is leveraged for various tasks including incident response and observability.

2. The framework according to claim 1, in which the one or more activity KG use a cloud based web service that offers fully featured global services from data centers.

3. The framework according to claim 1, in which serverless application activity logs are collected by simulating benign and malicious activities.

4. The framework according to claim 1, in which the serverless ontology comprises:
a) a first procedure regarding a framework maintainer that constructs and maintains the serverless ontology to provide structure for CSP log sources; and
b) a second procedure regarding how the CSP log sources are automatically transformed into the one or more activity KG.

5. The framework according to claim 1, in which a framework maintainer is adapted to:
a) examine each new log source event format;
b) update the serverless ontology with new or revised service entities and relationships;
c) incorporate a new or modified parsing process into a mapping module and an update procedure module; and
d) streamline semi-structured log source data into the structured graph-based activity representation.

6. The framework according to claim 1, in which each of the one or more activity KG is constructed by:
processing CSP activity logs;
importing data from each log source and mapping said data in the structured graph-based activity representation by parsing the **CSP** activity logs into graph representation triplets which are inserted into an activity KG database;
for each log event relationship, recording, by the one or more activity KG, an event relationship; and
storing predetermined relevant attributes.

7. The framework according to claim 1, in which relevant attributes are one or more of the following:
- Date;
- user agent;
- error message;
- region.

8. The framework according to claim 1, further comprising an Activity Enrichment Store (F) adapted to:
a) update and acquire mappings of resource names, enrichment names, and enrichment values for resource enhancement; and
b) integrate an asset criticality ranking into application resources.

9. The framework according to claim 1, further comprising an Incident Response Dashboard (H) for interacting with the one or more activity KG, the Incident Response Dashboard including one or more log exploration features.

## Patentansprüche

1. Serverloses Ontologie-Framework zum Verbessern einer Cybersicherheits-Beobachtbarkeit und einer Reaktion auf Vorfälle in verwalteten serverlosen Anwendungen, umfassend:
a) eine computergestützte Vorrichtung / einen computergestützten Server mit wenigstens einem Prozessor, einem Speicher und einer zugehörigen Software, welche/welcher zum Identifizieren von expliziten und impliziten ontologischen Entitäten und Beziehungen innerhalb semistrukturierter Anwendungsaktivitätsprotokolle und zum Erzeugen einer strukturierten graphenbasierten Aktivitätsdarstellung (D) für die semistrukturierten Anwendungsaktivitätsprotokolle eine protokollbasierte verwaltete serverlose Ontologie (C) ausführt; und
b) ein Perimeterless-Framework, welches eine Struktur für die semistrukturierten Anwendungsaktivitätsprotokolle bereitstellt, wobei Ereignisprotokollfelder einer Aktivitätsbeschreibung zugeordnet sind und einen aktivitätsbasierten Graphen erzeugen, wobei das Perimeterless-Framework dazu eingerichtet ist:
die semistrukturierten Anwendungsaktivitätsprotokolle zum Untersuchen und Priorisieren zu überwachen und zu analysieren, **dadurch gekennzeichnet, dass** das Perimeterless-Framework ein Perimeterless-Sicherheitsframework ist, welches nicht in die Anwendungsarchitektur integriert ist, wobei das Perimeterless-Framework zusätzlich dazu eingerichtet ist, die semistrukturierten Anwendungsaktivitätsprotokolle zum Untersuchen und Priorisieren von Cybervorfällen zu überwachen und zu analysieren und einen oder mehrere Aktivitäts-Knowledge-Graph, KG, zu erstellen, welche ein Netzwerk von realen Entitäten darstellen, die eine Beziehung zwischen den realen Entitäten veranschaulichen und durch einen Parser erzeugt werden, um die semistrukturierten Anwendungsaktivitätsprotokolle in den einen oder die mehreren Aktivitäts-KG zu transformieren,
wobei das Perimeterless-Framework gemäß einem vierschichtigen Schema implementiert ist, welches derart konfiguriert ist, dass:
i. eine erste Schicht die serverlose Ontologie (C) und ontologische Entitäten und Beziehungen von serverlosen Anwendungen in verwalteten Umgebungen definiert;
ii. in einer zweiten Schicht der Aktivitäts-KG die serverlose Ontologie erweitert, um einen spezifischen Cloud-Dienstanbieter, CSP, zu unterstützen;
iii. in einer dritten Schicht durch ein Anwenden CSP-spezifischen Wissens auf die semistrukturierten Anwendungsaktivitätsprotokolle ein spezifischer CSP-KG generiert wird; und
iv. in einer vierten Schicht der spezifische CSP-KG für verschiedene Aufgaben genutzt wird, welche Reaktion auf Vorfälle und Beobachtbarkeit umfassen.

2. Framework nach Anspruch 1, wobei das eine oder die mehreren Aktivitäts-KG einen cloudbasierten Webdienst nutzen, welcher voll ausgestattete globale Dienste aus Datenzentren anbietet.

3. Framework nach Anspruch 1, wobei serverlose Anwendungsaktivitätsprotokolle durch ein Simulieren harmloser und bösartiger Aktivitäten gesammelt werden.

4. Framework nach Anspruch 1, wobei die serverlose Ontologie umfasst:
a) ein erstes Verfahren, welches sich auf einen Framework-Verwalter bezieht, welcher die serverlose Ontologie erstellt und verwaltet, um eine Struktur für CSP-Protokollquellen bereitzustellen; und
b) ein zweites Verfahren, welches sich darauf bezieht, wie die CSP-Protokollquellen automatisch in den einen oder die mehreren Aktivitäts-KG transformiert werden.

5. Framework nach Anspruch 1, wobei ein Framework-Verwalter dazu eingerichtet ist:
a) jedes neue Protokollquellen-Ereignisformat zu untersuchen;
b) die serverlose Ontologie mit neuen oder überarbeiteten Dienstentitäten und Beziehungen zu aktualisieren;
c) einen neuen oder modifizierten Parsing-Prozess in ein Zuordnungsmodul und ein Aktualisierungsverfahrensmodul zu integrieren; und
d) semistrukturierte Protokollquelldaten in die strukturierte graphenbasierte Aktivitätsdarstellung zu rationalisieren.

6. Framework nach Anspruch 1, wobei jeder des einen oder der mehreren Aktivitäts-KG erstellt wird durch:
Verarbeiten von CSP-Aktivitätsprotokollen;
Importieren von Daten aus jeder Protokollquelle und Zuordnen der Daten in der strukturierten graphenbasierten Aktivitätsdarstellung durch ein Parsen der CSP-Aktivitätsprotokolle in Graphendarstellungstripletts, welche in eine Aktivitäts-KG-Datenbank eingefügt sind;
für jede Protokollereignisbeziehung, Aufzeichnen, durch den einen oder die mehreren Aktivitäts-KG, einer Ereignisbeziehung; und
Speichern vorbestimmter relevanter Attribute.

7. Framework nach Anspruch 1, wobei relevante Attribute eines oder mehrere aus dem Folgenden sind:
- Datum;
- Benutzeragent;
- Fehlermeldung;
- Region.

8. Framework nach Anspruch 1, ferner umfassend einen Activity-Enrichment-Store (F), welcher dazu eingerichtet ist:
a) Zuordnungen von Ressourcennamen, Anreicherungsnamen und Anreicherungswerten für eine Ressourcenverbesserung zu aktualisieren und zu erfassen; und
b) eine Rangfolge einer Kritikalität von Assets in Anwendungsressourcen zu integrieren.

9. Framework nach Anspruch 1, ferner umfassend ein Incident-Response-Dashboard (H) zum Interagieren mit dem einen oder den mehreren Aktivitäts-KG, wobei das Incident-Response-Dashboard eine oder mehrere Protokolluntersuchungsfunktionen umfasst.

## Revendications

1. Cadre d'ontologie sans serveur, destiné à améliorer l'observabilité en cybersécurité et la réponse aux incidents dans des applications sans serveur gérées, comportant :
a) un dispositif/serveur informatisé comprenant au moins un processeur, une mémoire et un logiciel associé, exécutant une ontologie sans serveur gérée à base de journaux (C) pour identifier des entités et des relations ontologiques explicites et implicites au sein de journaux d'activité d'application semi-structurés, et pour créer une représentation d'activité structurée à base de graphe (D) pour les journaux d'activité d'application semi-structurés ; et
b) un cadre sans périmètre fournissant une structure pour les journaux d'activité d'application semi-structurés, moyennant quoi des champs de journaux d'événements sont mappés vers une description d'activité et créent un graphe à base d'activité, le cadre sans périmètre étant adapté pour :
surveiller et analyser les journaux d'activité d'application semi-structurés à des fins d'enquête et de priorisation,
**caractérisé en ce que** le cadre sans périmètre est un cadre de sécurité sans périmètre non intégré au sein d'une architecture applicative, dans lequel le cadre sans périmètre est en outre adapté pour surveiller et analyser les journaux d'activité d'application semi-structurés afin d'enquêter sur, et de prioriser, des incidents cybernétiques, et pour construire un ou plusieurs graphes de connaissances, GC, d'activité, représentant un réseau d'entités réelles, illustrant une relation entre les entités réelles et celles créées par un analyseur, pour transformer les journaux d'activité d'application semi-structurés en le ou les GC d'activité,
dans lequel le cadre sans périmètre est mis en œuvre selon un schéma à quatre couches configuré de sorte que :
i. une première couche définit l'ontologie sans serveur (C) et les entités et relations ontologiques des applications sans serveur dans des environnements gérés ;
ii. dans une deuxième couche, le GC d'activité étend l'ontologie sans serveur afin de prendre en charge un fournisseur de services infonuagiques, FSI, spécifique ;
iii. dans une troisième couche, un GC de FSI spécifique est généré en appliquant des connaissances spécifiques au FSI aux journaux d'activité d'application semi-structurés ; et
iv. dans une quatrième couche, il est tiré parti du GC de FSI spécifique pour diverses tâches, dont la réponse aux incidents et l'observabilité.

2. Cadre selon la revendication 1, dans lequel le ou les GC d'activité utilisent un service web infonuagique qui offre des services mondiaux riches en fonctionnalités depuis des centres de données.

3. Cadre selon la revendication 1, dans lequel des journaux d'activité d'application sans serveur sont collectés en simulant des activités bénignes et malveillantes.

4. Cadre selon la revendication 1, dans lequel l'ontologie sans serveur comprend :
a) une première procédure concernant un mainteneur du cadre qui construit et maintient l'ontologie sans serveur afin de fournir une structure pour des sources de journaux de FSI ; et
b) une deuxième procédure concernant la manière dont les sources de journaux de FSI sont automatiquement transformées en le ou les GC d'activité.

5. Cadre selon la revendication 1, dans lequel un mainteneur du cadre est apte à :
a) examiner chaque nouveau format d'événement de source de journaux ;
b) mettre à jour l'ontologie sans serveur avec des entités et relations de service nouvelles ou révisées ;
c) incorporer un processus d'analyse nouveau ou modifié dans un module de mappage et un module de procédure de mise à jour ; et
d) rationaliser des données de source de journaux semi-structurées dans la représentation d'activité structurée à base de graphe.

6. Cadre selon la revendication 1, dans lequel chacun du ou des GC d'activité est construit en :
traitant des journaux d'activité de FSI ;
important des données à partir de chaque source de journaux et mappant lesdites données dans la représentation d'activité structurée à base de graphe, en analysant les journaux d'activité de FSI en des triplets de représentation en graphe qui sont insérés dans une base de données de GC d'activité pour chaque relation d'événement de journal, et en enregistrant, par le biais du ou des GC d'activité, une relation d'événement ; et
stockant des attributs pertinents prédéterminés.

7. Cadre selon la revendication 1, dans lequel les attributs pertinents sont un ou plusieurs de ce qui suit :
- une date ;
- un agent utilisateur ;
- un message d'erreur ; et
- une région.

8. Cadre selon la revendication 1, comprenant en outre un magasin d'enrichissement d'activité (F) adapté pour :
a) mettre à jour et acquérir des mappages de noms de ressources, de noms d'enrichissement et de valeurs d'enrichissement permettant l'amélioration de ressources ; et
b) intégrer un classement de criticité des actifs dans des ressources applicatives.

9. Cadre selon la revendication 1, comprenant en outre un tableau de bord de réponse aux incidents (H) destiné à interagir avec le ou les GC d'activité, le tableau de bord de réponse aux incidents comprenant une ou plusieurs fonctionnalités d'exploration de journaux.
